# EUROPEAN PATENT APPLICATION

(11) **EP 2 161 422 A2**
(43) Date of publication of application: **10.03.2010**
(21) Application number: 09168708.7
(22) Date of filing: 26.08.2009
(51) Int. Cl.: F01N 3/20

(54) **Urea tank assembly**

(30) Priority: 04.09.2008 US 204484
(71) Applicant: Delphi Technologies, Inc., Troy, MI 48007 (US)
(72) Inventor: Fulks, Gary C., Rochester, MI 48306 (US); Bordewyk, Todd A., Hudsonville, MI 49426 (US)
(74) Representative: Denton, Michael John

(57) **Abstract**

Exemplary embodiments of the present invention are directed towards improved systems and methods for the delivery of a urea solution to an exhaust gas treatment system. In one particular exemplary embodiment, a urea tank assembly is provided. The urea tank assembly includes a reservoir defining a fluid inlet opening for receiving urea solution and a fluid outlet opening for discharge of the urea solution. The urea tank further includes a vented hollow member located within the reservoir. The vented hollow member defines an internal hollow portion and a plurality of openings for providing fluid flow between the reservoir and the internal hollow portion. The urea tank further includes a heater located along the vented hollow member to cause heating of urea solution within the internal hollow portion and the reservoir. The urea tank further includes a fluid pump located within the reservoir. The fluid pump is in fluid communication with the internal hollow portion and the reservoir to move urea solution located therein through the fluid outlet opening. The fluid pump also includes a temperature sensor configured to determine the temperature of the urea solution within the reservoir, wherein heating of the urea solution is based upon the temperature of the urea solution within the reservoir.

## Description

### TECHNICAL FIELD

Exemplary embodiments of the present invention are directed towards improved systems and methods for the delivery of a urea solution to an exhaust gas treatment system.

### BACKGROUND OF THE INVENTION

Exhaust emission control has been and will continue to be of interest as effects of emissions from stationary and transient emission generating devices are continually being understood. This, along with government mandates, have caused manufacturers of emission generating devices, particularly internal combustion engines, to develop methods and devices for controlling the content of emissions emanating from such devices. In one particular sector, due to the advantages of diesel burning engines over gasoline burning engines, advancements of emission control for diesel engines are continuingly being sought. These advancements include emission control devices configured for removing particulate matter from an exhaust gas stream and/or converting certain exhaust gases, such as NO_{X} to specific exhaust gas outputs such as NO₂ and CO₂.

One particular advancement in the reduction of emissions from diesel and gasoline burning engines is the application of an ammonia solution to an exhaust gas stream prior to treatment by one or more components of an exhaust gas treatment system. In one particular configuration, a urea solution is added to the exhaust gas stream. The addition of ammonia and/or urea solution improves efficiency of the conversion of the NO_{X}. However, during certain operating conditions, such as extreme cold temperatures, the ammonia or urea solution may become frozen, thereby losing the ability to inject the solution into the exhaust gas stream. Further, increased effectiveness of the ammonia or urea may be achieved at higher temperatures.

While certain injection systems have been provided for the introduction of urea, few systems contemplate the addition of heat for prevention of freezing of the ammonia or urea. This is in part due to the relatively new application of urea to improve efficiency of exhaust gas treatment components. When heating systems are employed, such systems may be located with an ammonia or urea supply tank or along a supply line. However, these configurations require the addition of components to the exhaust treatment system, thereby adding further component and/or assembly cost. Further, these heating systems often continually draw unnecessary energy (e.g. electricity) away from the engine system thus reducing battery life and/or power to the engine.

In view of the foregoing, there is a need for improved urea delivery systems capable of heating ammonia, urea or other fluids used for injection into an exhaust gas stream.

### SUMMARY OF THE INVENTION

Exemplary embodiments of the present invention provide improved methods and devices for the delivery to urea, ammonia or other exhaust gas treatment solutions to exhaust gas treatment devices.

In one particular exemplary embodiment, a urea tank assembly is provided. The urea tank assembly includes a reservoir defining a fluid inlet opening for receiving urea solution and a fluid outlet opening for discharge of the urea solution. The urea tank further includes a vented hollow member located within the reservoir. The vented hollow member defines an internal hollow portion and an opening for providing fluid flow between the reservoir and the internal hollow portion. The urea tank further includes a heater located along the vented hollow member to cause heating of urea solution within the internal hollow portion and the reservoir. The urea tank further includes a fluid pump located within the reservoir. The fluid pump is in fluid communication with the internal hollow portion and the reservoir to move urea solution located therein through the fluid outlet opening. The fluid pump also includes a temperature sensor configured to determine the temperature of the urea solution within the reservoir, wherein heating of the urea solution is based upon the temperature of the urea solution within the reservoir.

In another particular exemplary embodiment, an exhaust gas treatment system is provided. The exhaust gas treatment system includes an exhaust gas treatment device in fluid communication with an internal combustion engine through a conduit, the exhaust gas treatment device being configured to receive and modify emissions of an exhaust gas stream. The system further includes a urea tank assembly configured to provide urea solution to the exhaust gas stream, the urea tank assembly includes a reservoir for receiving and holding urea solution. The reservoir further houses: i) a vented hollow member defining an internal hollow portion and a plurality of openings for providing fluid flow between the reservoir and the internal hollow portion, ii) a heater located along the vented hollow member to cause heating of urea solution within the internal hollow portion and the reservoir, and iii) a fluid pump in fluid communication with the internal hollow portion and the reservoir for pumping the urea solution located therein into the exhaust gas stream. The system further includes a controller for controlling heating and pumping of the urea solution within the reservoir.

In still another particular exemplary embodiment, a method of providing urea solution to an exhaust gas treatment device is provided. The method includes the steps of measuring an initial temperature of urea solution located within a reservoir; selectively activating a heater to cause heating to the urea solution based upon the measured temperature until the urea solution reaches a predetermined temperature, the heater being formed about a vented hollow member having a hollow portion in fluid communication with a pump and the reservoir; measuring a fluid level of urea solution within the reservoir to determine whether a predetermined minimum level of urea solution is within the reservoir; and enabling dispensing of the urea solution from within the reservoir if the measured temperature is greater than or equal to the predetermined temperature and the fluid level is greater than or equal to the predetermined minimum level.

The above-described and other features and advantages will be appreciated and understood by those skilled in the art from the following detailed description, drawings, and appended claims.

### BRIEF DESCRIPTION OF THE DRAWINGS

Other objects, features, advantages and details appear, by way of example only, in the following detailed description of embodiments, the detailed description referring to the drawings in which:
Figure 1 illustrates a schematic view of a exhaust gas treatment system according to an exemplary embodiment of the present invention;
Figure 2 illustrates a cross-sectional view of a urea tank assembly according to an exemplary embodiment of the present invention;
Figure 3 illustrates a hollow member according to an exemplary embodiment of the present invention;
Figure 4 illustrates another hollow member according to an exemplary embodiment of the present invention; and
Figure 5 illustrates a flow chart that demonstrates a method of providing urea solution to an exhaust gas treatment device according to an exemplary embodiment of the present invention.

### DESCRIPTION OF THE PREFERRED EMBODIMENTS

Exemplary embodiments of the present invention provide improved devices, systems and methods for the delivery of urea solution or other ammonia containing solution to an exhaust stream of an internal combustion engine. Exemplary embodiments of the present invention further provide devices, systems and methods for the heating or thawing of urea solutions or other ammonia containing solutions prior to delivery to an exhaust stream of an internal combustion engine. It should be noted that an ammonia solution, urea solution and other similar type of agent, derivative or additive used for improving efficiency of exhaust treatment systems are hereforth generally referred to as urea solution. However, this should not be considered limiting as other solutions are contemplated.

Referring to the drawings, an exemplary urea tank assembly 10 is shown. The urea tank assembly includes a reservoir 12 having a cavity 14 configured for receiving and holding a liquid, such as urea solution 16. The assembly further includes a hollow member 18, such as a cylindrical tube or pipe, having a one or more, or plurality of, openings 20 formed therethrough for providing fluid communication between a hollow portion 22 of the hollow member and the cavity of the reservoir. The assembly further includes a heater 24 located proximate to or formed by the hollow portion to heat the urea solution within and about the hollow member. The assembly also includes a pump 26 for causing fluid from within the cavity 14, and in some exemplary embodiments from within the hollow portion, to be pumped to an exhaust gas stream for dispensing therein.

In operation, the urea solution 16 is pumped, injected or otherwise placed into the cavity 14 through suitable urea input conduit 28 or through other means such as a capped opening. The urea solution is heated through heater 24 and pumped through a urea outlet conduit 30 through pump 26. Optionally, pumping of the urea solution may be achieved through a fluid level switch 32 and heating may be based upon temperature reading from a temperature sensor 34. The urea solution travels along the urea outlet conduit to a port 36 in fluid communication with an exhaust gas conduit 38 from an engine 40. The port provides means, such as an injector, for delivery into an exhaust gas stream and more particularly upstream from an exhaust gas treatment device 42.

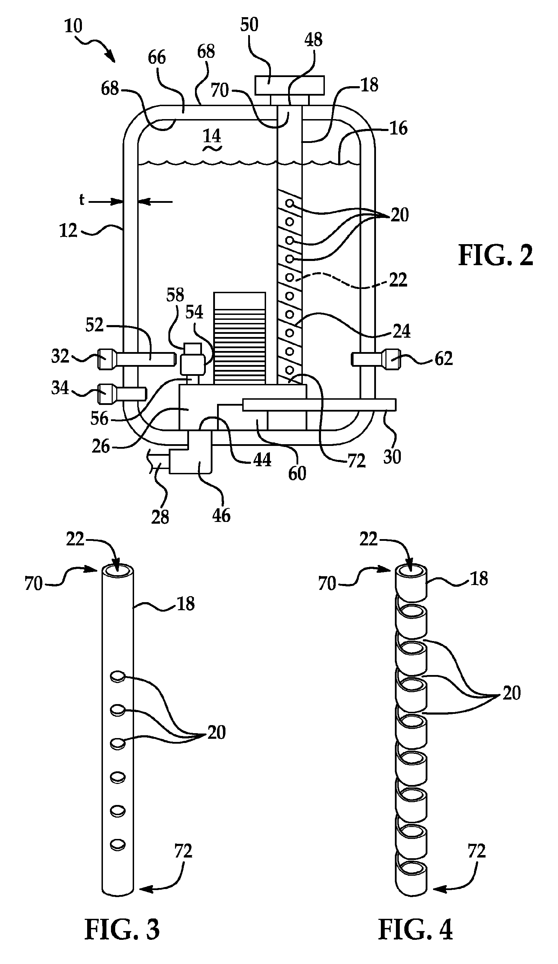

In greater detail, with reference to Figure 2, the urea tank assembly includes reservoir 12 configured for receiving and holding a urea supply. The reservoir includes a cavity suitable in shape and size for incorporation with an engine system and holding sufficient volume of urea supply, as commonly used with engines. For example, depending on the refill design of the urea tank assembly, the reservoir may be configured with a capacity of at least about 1-25 liters or more. Optionally, the urea tank assembly is formed with, or includes, a suitable attachment for mounting the urea tank assembly to a structure, such as a vehicle structure.

In one exemplary embodiment, the reservoir includes a first fluid inlet 44 for periodically receiving additional urea solution into cavity 14, via urea input conduit 28. For example, the first fluid inlet may be in fluid communication with a urea filing conduit/cap configured for engaging a urea filling device. The first fluid inlet includes fluid coupling 46 for fluidly coupling the urea input conduit to the reservoir. Optionally, in addition or alternatively, the urea tank assembly may include a second fluid inlet 48 for receiving additional urea solution into the cavity. In the exemplary embodiment, the second fluid inlet includes an opening formed through the reservoir and a cover or cap 50 configured for covering or closing the opening. However, this second opening may be alternatively utilized such as during assembly of hollow member 18 or otherwise. Further, in one exemplary embodiment, the cap may be configured to vent a build up of gases within the reservoir and/or to allow gas into and out of the reservoir cavity. The cap may be selected to prevent or control the pressurization of the reservoir cavity.

It should be appreciated that additional openings may be formed through the reservoir for mounting or placement of urea tank assembly components within the reservoir. Further, it is contemplated that the openings formed through the reservoir, or components extending therethrough, may include sealant features, such as a gaskets, adhesives or otherwise, for preventing urea solution within the reservoir from seeping out.

The reservoir may be formed of any suitable material capable of forming a reservoir for liquids. For example, the reservoir may be formed of plastic, rubber, metal, ceramic or otherwise. In one exemplary embodiment, the material forming the reservoir comprises a plastic. Further, the reservoir may include an insulator to improve thermal resistivity and reduce heat loss from the reservoir. This may be particularly advantageous for maintaining a temperature of heated urea solution within the reservoir above freezing. In one exemplary embodiment, the insulated reservoir comprises an increased wall thickness in combination with a material having high thermal resistivity. In another exemplary embodiment, the insulated reservoir is formed of a composite material including at least one thermally insulating layer 66 adjacently located or sandwiched between two additional layers 68.

Hollow member 18 is provided within the reservoir for assisting in the flow of urea solution and optionally for heating the urea solution as described herein. As previously mentioned, in one exemplary embodiment the hollow member includes hollow portion 22 that is in fluid communication with pump 26. The hollow member further includes or is formed with one or more, or plurality of, openings for fluidly connecting the hollow portion with the remainder of the reservoir. In one exemplary embodiment, referring to Figure 3, the hollow tube comprises a substantially continuous tube member including a plurality of openings. In another embodiment, referring to Figure 4, the hollow tube comprises a single member coiled to form a tube member, wherein a single opening (formed between adjacent coil members) extending around and along a length of the tube member. Accordingly the pump is in fluid communication with the reservoir through the openings of the hollow member for providing the pump with a continuous flow of urea solution.

The hollow member may be formed of any suitable shape and size. In one exemplary embodiment, the hollow member is formed of a tube extending vertically between a top portion and a bottom portion of the reservoir to form a hollow tube member. In this configuration, the openings of the hollow tube member are formed through side walls of the hollow member. In one exemplary embodiment the openings extend along the length of the hollow tube member and are suitably spaced to provide a continuously flow of urea solution to the pump. In one particular configuration, the openings are generally evenly spaced along the length of the hollow tube member. It should be appreciated that the openings formed through the tube member may be fixed in size and shape or may be adjustable, either manually or automated.

The hollow tube member includes a first end 70 configured for engagement with cap 50 and a second end 72 configured for engagement or placement proximate to pump 26. As previously mentioned, the cap may be configured for venting. In such a configuration, the cap acts to provide venting of the hollow portion of the hollow tube member. This may be particularly advantageous where the hollow member is further configured for heating. This may also be particularly advantageous in configurations where the urea solution being pumped flows through or is otherwise located within the hollow tube member, wherein the vent configuration of the cap provides equalization of pressure for uninterrupted flow of fluid through the pump.

The hollow member, or hollow tube member, may be formed of any suitable material including metal, plastic, rubber or otherwise. In one particular exemplary embodiment, the hollow member is formed of a material having good thermal conductivity. In another exemplary embodiment, the hollow member may comprise or be formed of a resistance heater. Accordingly, in one exemplary embodiment it is contemplated that the hollow member is formed of metal.

In one particular exemplary embodiment, the reservoir 12 includes one or more heaters 24 for heating the urea solution 16 therein. In one particular configuration, the hollow member 18 includes a heater located along all or a portion of the hollow member. The heater may be located on an exterior of the hollow member, on an interior of the hollow member or both. Also, it is contemplated that the heater may be integrally formed with or within the hollow member or the hollow member itself forms at least a portion of the heater. In any of these configurations, the heater extends between the pump and the cap to cause heating of at least a portion of the hollow member. In one configuration, the heater causes heating, or extends along, of at least about 50% of the length of the hollow tube member, or more particularly at least about 75% of the length of the hollow tube member or even more particularly about 100% of the length of the hollow tube member. Other configurations are contemplated.

In one exemplary embodiment, referring to Figure 2, the heater is formed about an exterior portion of the hollow tube member and more specifically is coiled or wound about the hollow tube member. The heater may also include one or more openings for providing fluid flow between the hollow portion of the hollow member and the reservoir. The heater may comprise any suitable heater, particularly heaters configured for heating liquid fluids. In one exemplary embodiment, the heater comprises an electric resistance heater. The heater may be signal communication with a controller, as discussed herein, for controlling application of current to the heater, heat time, or otherwise.

The heater may be formed of any suitable material. As previously mentioned, the heater may comprise a stand alone element or may comprise a portion or all of the hollow member 18. In any configuration, the heater may be formed of any suitable electrically resistive material.

In one exemplary embodiment, the urea tank assembly further includes one or more temperature sensors 34 for determining the temperature of the urea solution within the reservoir. The sensor may comprise any suitable sensor for determining the temperature of the urea solution such as a thermistor. In one exemplary embodiment, the temperature sensor is mounted to the reservoir and extends into cavity 14. The sensor is configured to generate and determine a current and voltage through the urea solution to further determine the temperature of the urea solution based upon known characteristics of the temperature sensor 34 and the urea solution, such as specific heat and/or otherwise. The temperature sensor then generates a signal based upon the temperature of the urea solution, such as a signal which varies as a function of and is thus indicative of the temperature of the urea solution. In one configuration, the sensor is in signal communication with a controller for transmission of a signal based upon the temperature of the urea solution. Advantageously, the controller may be in further communication with the heater for selectively controlling heating thereof, through an application of current, based upon the sensed temperature of the urea solution.

As previously mentioned, exemplary embodiments of the urea tank assembly further include a pump 26 for transporting urea fluid from within the reservoir to port 36 which is in fluid communication with the exhaust gas conduit. The pump may comprise any suitable pump configured for movement of fluid through a conduit. In one exemplary embodiment, the pump is located within the reservoir and in fluid communication with the urea solution located therein. In this configuration, the pump is in fluid communication with the hollow portion of the hollow member for drawing fluid from within the hollow portion and the reservoir, via openings 20, to the urea outlet conduit. However, other pump configurations are contemplated.

In one configuration, the pump includes a solenoid for generating a pumping force within the pump through an application of current. In this configuration, upon application of currents to the solenoid, a piston within the pump reciprocates thereby generating a pumping movement which causes fluid to be drawn through the hollow portion and pushed into the urea outlet conduit. In one exemplary embodiment, the pump is in communication with a controller for controlling various aspect of the pump. For example, the controller may be configured to initiate power to the pump and further control speed of the pump.

Optionally, the urea tank assembly may further include a fluid level sensor, such as a switch for controlling operation of the pump. This may be particularly advantageous for limiting operation of the pump to conditions where a minimum amount of urea solution exists within the reservoir. In one configuration, one or more components of the switch are located within the reservoir and are in direct contact with the urea solution located therein. The switch may be configured for direct signal communication with the pump or it may be in signal communication with a controller configured to control the pump. Other configurations are contemplated.

In one exemplary embodiment, the switch comprises a magnetically actuated switch. In this configuration, the magnetically actuatable switch is configured to form an open or closed circuit based upon the existence or non-existence of a magnetic field. One example of a suitable magnetically actuated switch comprises a reed switch. The reed switch includes a magnetically actuatable switch portion 52 including one or more electrical leads configured to engage or disengage one another upon application of magnetic force. The reed switch also includes a moveable magnet 54 having a suitable force for causing engagement of the electric leads. In the particular configuration shown, the moveable magnet is vertically moveable along a post or guide 56 and is buoyant with respect to the urea solution located within the reservoir. Vertical movement of the moveable magnet is limited by vertical stop 58.

In operation, when a suitable level of urea solution is in the cavity, such as a level greater than or equal to a minimum level, the moveable magnet remains adjacent to the stop thereby causing electrical leads of the actuatable switch portion to engage one another thereby closing the circuit and allowing the pump to operate. Once the urea solution level falls below the stop or otherwise causes downward movement of the moveable magnet, the electrical leads disengage thereby opening the circuit and preventing the pump from operating. As should be appreciated, this configuration prevents the pump from operating when the urea level is too low thereby preventing damage to the pump, or from draining all of the urea solution from the reservoir.

Optionally, the urea tank assembly may further include one or more additional components for aiding in the delivery of suitable urea solution to an exhaust gas stream. In one exemplary embodiment, the urea tank assembly includes a hydrolyzing chamber 60 for converting the aqueous urea solution to ammonia, carbon dioxide and steam. Advantageously, this modification improves efficiency of the exhaust treatment device. In another exemplary embodiment, the urea tank assembly includes a urea quality sensor 62 for determining the characteristics of the urea within the reservoir. The urea quality sensor 62 measures the resistivity or dielectric constant of the aqueous urea solution to determine or ensure that the aqueous urea solution is of sufficient quality. It should be appreciated that other features and configurations may be available for use with the urea tank assembly.

The urea tank assembly and/or exhaust treatment system may include a controller for controlling one or more features or functions of the urea tank assembly or exhaust treatment system. Advantageously, this provides the ability to not only ensure proper function of the urea tank assembly and/or exhaust treatment system but also ensure that suitable urea solution, or derivatives thereof, are being supplied to the exhaust treatment system.

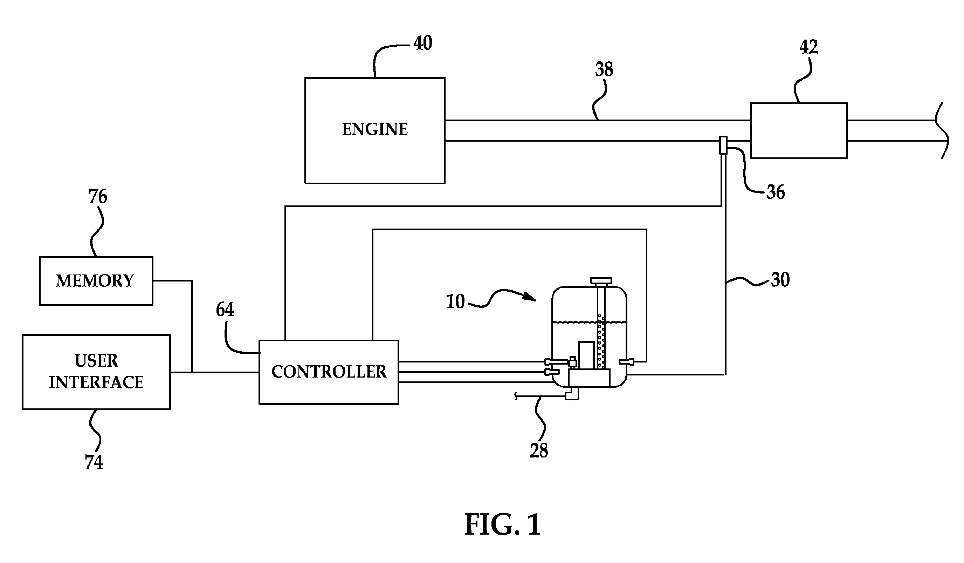

In one exemplary embodiment, referring to Figure 1, a controller 64, such as a microprocessor based control module, is provided for communicating with the urea tank assembly and optionally one or more components of an exhaust treatment system. In one configuration, the controller is in communication with temperature sensor 34 for receiving information pertaining to a temperature of the urea solution within the reservoir. Based upon the temperature of the urea solution, the controller may selectively apply suitable current to heater 24 for causing heating of the urea solution, if necessary. In another configuration, the controller is in communication with a level sensor for receiving information pertaining to the level of the urea solution within the tank. Based upon this information, the controller selectively activates the pump if the level of urea solution within the tank is at or above a minimum level, as determined by the sensor. In yet another suitable configuration, the controller may be in communication with the urea quality sensor and hydrolyzing chamber 60 for ensuring suitable configuration and quality of urea is dispensed into the exhaust gas stream. In still another configuration, the controller may be in signal communication with an injector of port 36 for controlling discharge of the urea solution into the exhaust gas stream.

The controller may also provide a user interface, or may be in communication with a user interface, for providing information pertaining to a status of one or more components of the exhaust gas treatment system or the pump assembly. Also, the user interface also provides the ability to control one or more components of the exhaust gas treatment system or the pump assembly. In one exemplary embodiment, referring again to Fig. 1, the controller is in communication with a user interface 74 configured to provide information pertaining to the pump assembly, such as temperature of the urea fluid, level of the urea fluid, operation mode or status of the pump assembly or exhaust treatment system, or otherwise. The display of information may be comprise any suitable gauge device, lighting device or otherwise. Information pertaining to operation of the pump assembly and exhaust treatment system, or to user or manufacturer's selected settings for operation may be stored in a memory module 76. It should be appreciated that other configurations are contemplated including communication and/or control of other features or devices of the urea tank assembly and/or exhaust treatment system.

In view of the foregoing and in reference to Figures 1 and 2, an exemplary embodiment of a urea tank assembly 10 and exhaust gas treatment system is shown. The urea tank assembly includes a first fluid inlet 44 and fluid coupling 46 for attachment of a urea input conduit 28 to the urea tank assembly for receiving a urea solution into cavity 14 of reservoir 12. The temperature of the urea solution is determined through temperatures sensor 34 and relayed to a controller 64. Based upon the measured temperature, the urea solution is selectively heated, or thawed, through heater 24. The fluid level is also measured, through switch 32, to determine if a minimum amount of urea solution exists within the reservoir. Upon the urea solution reaching a predetermined temperature, a pump 26 causes urea fluid to be drawn into and/or through a hollow portion 22 of hollow member 18 and through a hydrolyzing chamber where the urea solution is converted to ammonia and CO₂. The urea solution is then pumped through urea outlet conduit and to port 36 where it is dispensed, via injector, into an exhaust gas stream flowing through exhaust gas conduit 38 from engine 40. The urea solution then flows with the exhaust gas to the exhaust gas treatment device 42 where it acts to improve efficiency of emission reduction.

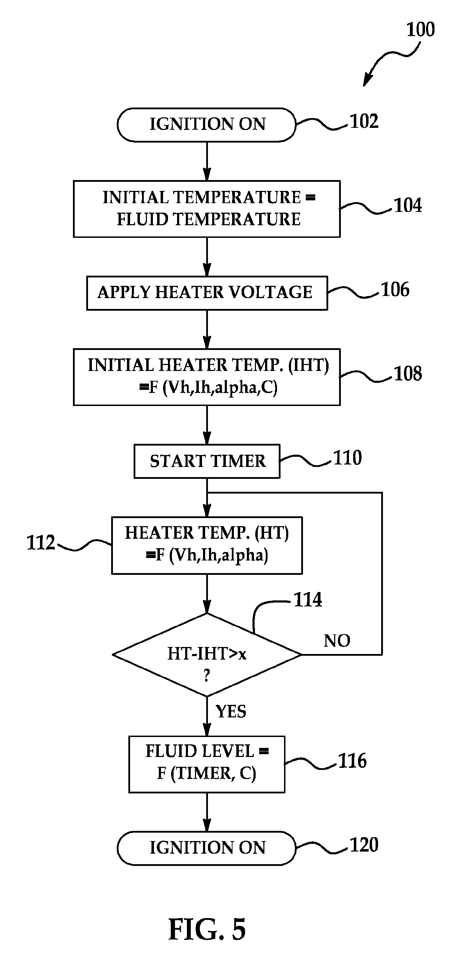

Exemplary embodiments of the present invention further include methods of determining the amount, e.g., level, volume or otherwise, of urea solution within the reservoir 12. The amount of urea solution within the reservoir is determined based upon electrical resistance of the heater 24 located within the reservoir. Referring to Figure 5, an exemplary method 100 of determining an amount of urea solution within a reservoir 12 is shown. The method includes an algorithm performed by a control unit, such as controller 64, for ascertaining the amount of urea solution within the reservoir. The method includes the step of 'ignition on' 102 of an aqueous urea dosing system such as with an exhaust treatment system and urea tank assembly 10. The ignition on may be in response to a "Key-on" indication of the vehicle or other indication that aqueous urea dosing will be required.

The method further includes determining of an initial temperature of the urea solution 104 within the reservoir 12. This measurement is taken through suitable thermostat, such as temperature sensor 34 or otherwise. Upon determination of the initial temperature of the urea solution, the method includes selectively applying a voltage 106 to the heater 24, and circuit thereof, for causing heating of the heater. The method also includes determining an initial heater temperature (IHT) 108. Upon application of voltage to the heating circuit, an initial current of the heating circuit is measured through a Hall effect device, current shunt or other suitable device or means. With the voltage (Vh) and current (Ih) of the heating circuit known, it is possible to determine the temperature and hence resistance of the heater, which is further based upon the specific heat (c) of the surrounding aqueous urea solution to heater 24 and the thermal coefficient of resistivity (alpha) of the heater material (e.g., copper or otherwise). Over time, the resistance of the heater will vary as a function of temperature of the heater 24 with reference to measured initial temperature. Accordingly, by measuring heater current, through the Hall effect device or otherwise, it is possible to determine an instantaneous average heater temperature of the heater.

Upon initiating voltage and hence heating of heater 24, the method includes monitoring a time period of heating 110 from initial heating, e.g., application of heater voltage 106. The purpose of this is to determine the heat transfer rate of the heater 24 to the surrounding environment, within cavity 14, i.e., urea solution or air. The importance of the heat transfer rate is to determine to what extent the surrounding environment to the heater comprises urea solution and to what extent the surrounding environment to the heater comprises air. For example, if the cavity 14 of reservoir 12 is substantially empty, the heat transfer rate from the heater to the surrounding air would be relatively low and the incremental change in average heater temperature would be relatively fast. In contrast, if the cavity 14 of reservoir 12 is substantially full with urea solution, the heat transfer rate form the heater to the surrounding acquiesce solution would be relatively high and the incremental change in average heater temperature would be relatively low. Accordingly, there is a correlation between the level of urea solution within the cavity and the heat transfer rate of heater 24 and incremental change in average temperature thereof. More so, the measure of time required for an incremental change in heater resistance will be a measure of ratio of the heater in contact with aqueous urea solution and air, thus allows for a determination of level, and volume, of urea solution within the reservoir 12 to be made.

In view of the correlation, the method further includes monitoring the average heater temperature (HT) 112 as the measurement of time 110 is made. Once the change in temperature, e.g., heater temperature (HT) - initial heater temperature (IHT), has reached a predetermined difference (x) 114, the fluid level (F) is calculated 116 based upon the change in temperature, lapse in time and specific heat (C) of the urea solution. Should the level of urea solution within the reservoir 12 be acceptable, pump 26 is initiated to cause discharge of the urea solution 120.

In another exemplary embodiment, the fluid level within the reservoir is based upon the initial temperature of the heater and the change in voltage of the heater over time, given a constant current being applied to the heater. It should be appreciated that other configurations may be possible to determine the level of urea solution within the reservoir based upon current and/or resistance (or the change current and/or resistance) through the heater, specific urea solution and possibly other associated components.

While exemplary embodiments have been described and shown, it will be understood by those skilled in the art that various changes may be made and equivalents may be substituted for elements thereof without departing from the scope of the invention. In addition, many modifications may be made to adapt a particular situation or material to the teachings without departing from the essential scope thereof. Therefore, it is intended that the invention not be limited to the particular embodiments disclosed as the best mode contemplated for carrying out this invention, but that the invention will include all embodiments falling within the scope of the appended claims.

## Claims

1. A urea tank assembly (10), comprising
a reservoir (12) having a fluid inlet opening for receiving urea solution and a fluid outlet opening for discharge of the urea solution;
a vented hollow member (18) located within the reservoir, the vented hollow member defining an internal hollow portion (22) and one or more openings (20) for providing fluid flow between the reservoir and the internal hollow portion;
a heater (24) located at least partially long the vented hollow member to cause heating of urea solution within the internal hollow portion and the reservoir;
a fluid pump (26) located within the reservoir, the fluid pump being in fluid communication with the internal hollow portion and the reservoir to move urea solution located therein through the fluid outlet opening; and
a temperature sensor (34) configured to determine the temperature of the urea solution within the reservoir for controlling the heating of the urea solution by the heater.

2. The urea tank assembly of claim 1, wherein the vented hollow member (18) comprises a tube member, the tube member including an end portion (72) fluidly coupled with the fluid pump (26).

3. The urea tank assembly of claim 2, wherein the heater (24) is wound about the tube member.

4. The urea tank assembly of any one of claims 1 to 3, further comprising a level sensor (32) for controlling operation of the fluid pump (26) based upon fluid level of the urea solution within the reservoir (12).

5. The urea tank assembly of claim 4, wherein the level sensor (32) comprises a magnetically actuated switch in communication with a float magnet located within the reservoir (12).

6. The urea tank assembly of any one of claims 1 to 5, further comprising a hydrolyzing chamber (60) for modifying the urea solution.

7. The urea tank assembly of any one of claims 1 to 6, further comprising a urea quality sensor (62) for determining one or more characteristics of the urea solution within the reservoir (12).

8. The urea tank assembly of any one of claims 1 to 7, further comprising a controller (64) which is in signal communication with the heater (24), fluid pump (26), temperature sensor (34), or other components (32, 62) or a combination thereof.

9. An exhaust gas treatment system, comprising,
an exhaust gas treatment device being in fluid communication with an internal combustion engine through a conduit, the exhaust gas treatment device being configured to receive and modify the constituents of an exhaust gas stream;
a urea tank assembly configured to provide urea solution to the exhaust gas stream, the urea tank assembly being as claimed in any one of claims 1 to 8.

10. A method of determining an amount of urea solution within a reservoir of a urea tank assembly, comprising:
i) determining an initial temperature of the urea solution within the reservoir, the urea solution having a specific heat constant;
ii) applying a current to a circuit of a heater to generate a heater voltage, the heater being located within the reservoir and configured to heat in response to the heater voltage;
iii) determining an initial average temperature of the heater based upon the initial temperature of the urea solution, specific heat constant of the urea solution, applied current to the heater and heater voltage;
iv) monitoring a time period required to elevate the average temperature of the heater to a predetermined average temperature; and
v) determining the amount of urea solution within the reservoir of the urea tank assembly based upon the time period required to elevate the average temperature to the predetermined average temperature and the specific heat constant of the urea solution.

11. The method of claim 10, wherein the amount of urea solution comprises level of urea solution within the reservoir, volume of urea within the reservoir or both.

12. The method of claim 10, wherein one or more of steps (i) through (v) are performed by a controller of the urea tank assembly.

13. The method of claim 10, wherein all of steps (i) through (v) are performed by a controller of the urea tank assembly.

14. The method of claim 10, wherein the applied current to the heater is determined through a Hall effect device or current shunt.

15. The method of claim 10, wherein the step of determining the amount of urea solution within the reservoir is based upon a heat transfer rate between the heater and the urea solution, air surrounding the heater or both.
